# EUROPÄISCHE PATENTSCHRIFT

(11) **EP 2 024 145 B1**
(45) Veröffentlichungstag und Bekanntmachung des Hinweises auf die Patenterteilung: **09.06.2010**
(21) Anmeldenummer: 07725091.8
(22) Anmeldetag: 11.05.2007
(51) Int. Cl.: B25J 19/00

(54) **GELENKROBOTER MIT REDUNDANTEN FUNKTIONSELEMENTEN**
ARTICULATED ROBOT HAVING REDUNDANT FUNCTIONAL ELEMENTS
ROBOT ARTICULÉ À ÉLÉMENTS FONCTIONNELS REDONDANTS

(30) Priorität: 15.05.2006 DE 102006022889
(43) Veröffentlichungstag der Anmeldung: 18.02.2009
(73) Patentinhaber: KUKA Roboter GmbH, 86165 Augsburg (DE)
(72) Erfinder: KRUMBACHER, Rainer, 87675 Rettenbach (DE); MARKERT, Joachim, 86167 Augsburg (DE); MERK, Günther, 86450 Altenmünster (DE)
(74) Vertreter: Lempert, Jost
(86) Internationale Anmeldenummer: PCT/EP2007/004171
(87) Internationale Veröffentlichungsnummer: WO 2007/131712

(56) Entgegenhaltungen:
- EP-A- 1 475 193
- EP-A1- 0 554 711
- EP-A2- 0 947 296
- WO-A-00/43170
- DE-A1- 19 733 169
- FR-A1- 2 608 959
- US-A- 5 245 263

## Beschreibung

Die Erfindung betrifft einen Gelenkroboter mit durch Gelenke verbundenen Robotergliedern und mit an den Gelenken einwirkenden Funktionselementen, gemäß Oberbegriff des Anspruchs 1, wie er aus der US-A-5 245 263 bekannt geworden ist.

Heutige Robotermechaniken wie an Gelenkrobotern sind in der Regel in allen Achsen als offene Kinematikketten ausgebildet. Dieser Aufbau ermöglicht eine hohe Beweglichkeit bei geringen Kosten. Allerdings sind die jeweiligen Baugruppen wie Motore, Getriebe und Strukturteile in der Regel nur einfach ausgeführt. Wenn also eines dieser Bauteile versagt, dann führt das unweigerlich zu einem Schadensfall. Zudem fehlt in der Regel die Möglichkeit, die Fehlerquelle einwandfrei festzustellen. Durch die kontinuierliche Weiterentwicklung sind komplette Ausfälle der Roboter heute selten und im Rahmen einer Industrieanwendung ist dieses Restrisiko durchaus vertretbar. Personenschäden sind hier durch einen Ausschluss von Personen aus dem Arbeitsraum des Roboters vermieden. Bei Applikationen jedoch, bei denen Personen durch den Roboter bewegt werden (z.B. in der Form eines Fahrgeschäfts), ist ein höheres Maß an Sicherheit erforderlich.

Heute bestehende Systeme dieser Art sehen vor, dass alle Bauteile mit einer entsprechenden Sicherheit ausgelegt sind, um einen Bruch zu vermeiden. Die Qualität der Strukturteile wird durch entsprechende Überprüfungsmaßnahmen wie z.B. Ultraschalluntersuchung oder Röntgenuntersuchung sichergestellt. Bei Bauteilen wie Getrieben kann zwar durch Rechnung sichergestellt werden, dass die Achsen durch einen nicht Schadensfall in einzelne Teile zerbrechen, auf Grund der Komplexität der Baugruppen kann aber keine absolute Sicherheit gegen das freie Durchdrehen der Achse gewährleistet werden. Dies gilt in ähnlicher Weise für die Motore und Haltebremsen des Roboters. Deshalb werden die Aufstellorte, Achswinkel und Endanschlagspuffer dieser Maschinen so gestaltet, dass die Fahrgäste selbst bei einem Versagen eines Motors und eines Getriebes nicht mit der umstehenden Peripherie kollidieren können und die Bewegung mit einer zulässigen Beschleunigung vom Puffer aufgefangen wird. Somit ist der Roboter ein sicheres System. Allerdings muss hierfür der Arbeitsraum so stark eingeschränkt werden, dass die Bewegungsmöglichkeiten gegenüber einem normalen Roboter extrem eingeschränkt werden. Diese Einschränkung ist so stark, dass der Roboter für viele Bereiche der Personenbeförderung nur eingeschränkt genutzt werden kann. Aus diesem Grund ist eine Manipulation nötig, die jede Fehlerquelle sicher erkennt und die Bewegung ohne Gefährdung der Fahrgäste abbrechen kann. Neben der Manipulation erfolgt auch eine entsprechende Auswertung von Sensorsignalen.

Die DE-A-19733169 offenbart zwei redundante Haltebremsen, die auf dass elbe Bauteil einwirken.

Demgegenüber liegt der Erfindung die Aufgabe zugrunde bei einem Gelenkroboter, insbesondere zum Transport von Personen, wie als Fahrgeschäft, Simulator oder dergleichen, die Sicherheit unter Reduzierung der mechanischen Begrenzungen des Arbeitsraums zu erhöhen.

Erfindungsgemäß wird die genannte Aufgabe bei einem Gelenkroboter der eingangs genannten Art durch die Merkmale des Anspruchs 1 gelöst.

Funktionselemente sind Ge-Haltebremsen.

Gemäß der Erfindung ist vorgesehen, dass Haltebremsen als Funktionselemente doppelt ausgelegt sind, wobei dann insbesondere der Roboter auch bei Stromausfall in jeder Position sicher gestoppt und gehalten wird. In diesem Zusammenhang ist bevorzugter Weise eine Überwachungseinrichtung zur zyklischen Überwachung der Haltebremsen vorgesehen. Die Prüfung der Bremsen kann beispielsweise regelmäßig vor oder nach einem Betriebszyklus, wie einem Fahrzyklus bei einem als Fahrgeschäft ausgebildeten oder Simulator fungierenden Roboter durchgeführt werden oder aber zumindest täglich. Hierzu werden die Roboterachsen langsam bewegt und die Bremsen nacheinander einzeln geschlossen und wieder geöffnet. Am Motorstrom der jeweiligen Achse lässt sich das zur Verfügung stehende Bremsmoment erkennen. Sollte eine Bremse außerhalb der Toleranzbereiche liegen, so ist sie vor Inbetriebnahme des Roboters zu tauschen.

In weiterer bevorzugter Ausgestaltung ist vorgesehen, dass Sensoren redundant ausgelegt sind. Überall wo Sensoren angeordnet sind, werden diese zumindest zweifach vorgesehen, wobei gleiche oder auch auf unterschiedlichen Prinzipien arbeitende Sensoren eingesetzt werden können, so dass hierdurch eine Redundanz der Fehlerdetektion gegeben ist.

Weitere bevorzugte Ausgestaltungen der Erfindung sehen vor, dass ein Gewichtsausgleichsystem redundant ausgebildet ist. Gewichtsausgleichsysteme können in Form von Federn, wie hydraulischen, pneumatischen oder mechanischen Federn ausgebildet sein. Diese sind parallel nebeneinander angeordnet, so dass auch hierdurch eine Sicherheitsredundanz bewirkt wird. Sensoren zur Überprüfung der Funktionstüchtigkeit der Federn sind an jeder derselben zumindest einfach, ggf. auch mehrfach vorgesehen. Bei fluidbasierten Ausgleichssystemen, wie Hydropneumatiksystemen, pneumatischen oder hydraulischen Systemen erfolgt die Kontrolle insbesondere durch zwei redundante Drucksensoren. Bei Unterschreiten des Fülldrucks wird das gesamte System stillgelegt, ebenso bei unterschiedlichen Anzeigen der beiden Sensoren. Das Gewichtsausgleichsystem ist derart ausgelegt, dass jede seiner parallelen Einheiten die Bewegung des Roboterglieds um die zugehörige Achse, insbesondere der Schwinge der Achse A2 des Roboters anhalten kann, wenn die andere Einheit ausfällt.

Wegaufnehmer zur Achspositionsbestimmung können ebenfalls redundant ausgeführt werden und bestehen vorzugsweise aus einer Kombination von relativen und absoluten Weggebern. Sie werden antriebs- und abtriebsseitig angeordnet. Damit wird der komplette Antriebsstrang des Roboters auf Fehler überprüft. Wenn ein oder beide Wegsignale vom Sollwert abweichen, dann wird der Roboter stillgesetzt. Durch Verwendung mindestens eines Absolutwertgebers pro Achse kann auch die Justage der Roboterachsen überprüft werden. Bei fehlerhaften oder voneinander abweichenden Werten wird das System stillgesetzt.

In bevorzugter Ausführung sind die durch Gelenke verbundenen Roboterglieder in Form einer offenen kinematischen Kette angeordnet. Es kann auch vorgesehen sein, dass die Roboterglieder zumindest partiell in Form einer geschlossenen kinematischen Kette angeordnet sind.

Zur zusätzlichen Erhöhung der durch redundante Auslegung einzelner Funktionselemente und/oder Sensoren bewirkten Sicherheit ist in einer Weiterbildung der Erfindung ein Vergleich der von dem/den Wegaufnehmer(n) ermittelten Istwerten der Achspositionen mit vorangehend ermittelten oder vorgegebener Sollwerte vorgesehen. Bei Feststellen einer Abweichung der Istwerte von den Sollwerten außerhalb festgelegter Toleranzgrenzen erfolgt ein Anhalten des Systems innerhalb eines definierten Sicherheitsraumes. In bevorzugter Ausführung werden die Toleranzgrenzen unter Einbeziehung vorher bestimmter Toleranzbereiche einzelner Funktionselemente, wie Motoren, Bremsen oder Gewichtsausgleichsysteme, ermittelt. Dabei können Sollwerte in Form einer idealen Bahnkurve der Roboterbewegung im Rahmen einer Computersimulation, wie einer Not-Stop-Simulation, berechnet werden, in welcher Parameter wie Geschwindigkeit, Beschleunigung, Traglast und Roboterposition berücksichtigt werden. Unter Einbeziehung der einzelnen Toleranzbereiche der Funktionselemente und/oder anderer Ausfallsszenarien innerhalb des Robotersystems und den damit einhergehenden Veränderungen der simulierten Bahnkurven können maximale Abweichungen von einer idealen Bahnkurve, insbesondere der maximale Nachlaufweg bei einem Not-Stop-Ereignis, mit hinreichender Genauigkeit erfasst werden. Beispielsweise sind die so ermittelten Sicherheitsräume, die zur Sicherheitsgewährleistung zwischen Roboter und Roboterumgebung einzuhalten sind, in Form eines die ideale Bahnkurve einhüllenden Schlauches gebildet, in dessen Innenraum der Roboter unter allen möglichen Fahrzuständen und Berücksichtigung aller sicherheitsrelevanten Parameter sicher anhält. Bevorzugt werden die Sicherheitsräume zur weiteren Erhöhung der Sicherheit noch durch Beaufschlagung von Störkonturen einer Traglast oder erforderlichen Sicherheitsabständen zur Umgebung erweitert.

Bei einem erfindungsgemäßen Roboter werden also die Haltebremsen als Strukturteile, deren technische Funktion einfach und klar definiert ist, durch Berechnung und Prüfung sicher ausgelegt. Methoden zur Herstellung der Sicherheit sind Berechnung von Verbindungen, FEM-Berechnungen der Bauteile, geeignete Wahl von Sicherheitsfaktoren, Fertigung durch qualifizierte Hersteller und geeignete Qualitätssicherungsmethoden, wie Röntgenprüfungen und Ultraschalluntersuchungen. Bei Bauteilen mit komplexerem Aufbau, wie beispielsweise Kompaktgetrieben oder Lagerungseinheiten, wie Drehkränzen, können diese in gleicher Weise so ausgeführt werden, dass sie auch beim schwersten anzunehmenden Schaden nicht brechen, d.h. Antriebs- und Abtriebsseite sich nicht trennen. Damit ist die Grundfunktion eines Haltens sicher gewährleistet. Bei komplexeren Zusammenhängen, wie sie bei den oben erörterten Funktionselementen gegeben sind, erfolgt über die erfindungsgemäß redundante Auslegung eine Überwachung.

Durch die Erfindung wird erreicht, dass nicht nur jeder mögliche Fehler sicher erkannt wird, sondern dass im Fehlerfalle jede Gefährdung, insbesondere von Personen, durch Roboter transportierte Personen ausgeschlossen ist.

Weitere bevorzugte Ausgestaltungen der Erfindung ergeben sich aus den Ansprüchen und aus der nachfolgenden Beschreibung, in der ein Ausführungsbeispiel eines Gelenkroboters unter Bezugnahme auf Teile eines solchen zeigenden Zeichnungen erläutert ist. Dabei zeigt:
- Fig. 1: ein Gelenkroboter in Seitenansicht;
- Fig. 2: eine Frontansicht auf Karussell und Schwinge ei- nes solchen Roboters in Richtung des Pfeils I der Fig. 1;
- Fig.3: eine Sicht auf Karussell und Schwinge einschließ- lich zwischen diesem angeordneten Gewichtsaus- gleichsystem in Rückansicht entsprechend dem Pfeil II der Fig. 1;
- Fig.4: die Darstellung von Sensoren an einem Roboterarm;
- Fig. 5: eine Mehr-Getriebe-Anordnung eines Roboters mit erfindungsgemäß redundanter Bremsauslegung; und
- Fig.6: ein Ablaufdiagramm eines erfindungsgemäßen Ver- fahrens zur Fehlerüberwachung.

Ein Gelenkroboter 1 weist einen Sockel 2, ein auf diesem befindliches und um die erste Achse A1 drehbares Karussell 3, ein an diesem schwenkbar um eine in der Regel zur Achse A1 senkrecht angeordnete zweite Achse A2 verschwenkbare Schwinge 4, einen an dieser angelenkten, in der Regel um eine zur Achse A2 parallele Achse A3 verschwenkbaren Roboterarm 5 sowie eine um eine vierte Achse A4 drehbar angeordnete Hand 6 auf, die zur Gewährleistung einer vollen Beweglichkeit weitere um zwei Achsen A5 und A6 drehbare Teile aufweist.

Das Karussell 3 und die Schwinge 4 sind zur Entlastung des die Schwinge bewegenden Motors in der Regel durch ein Gewichtsausgleichsystem 10.1 verbunden.

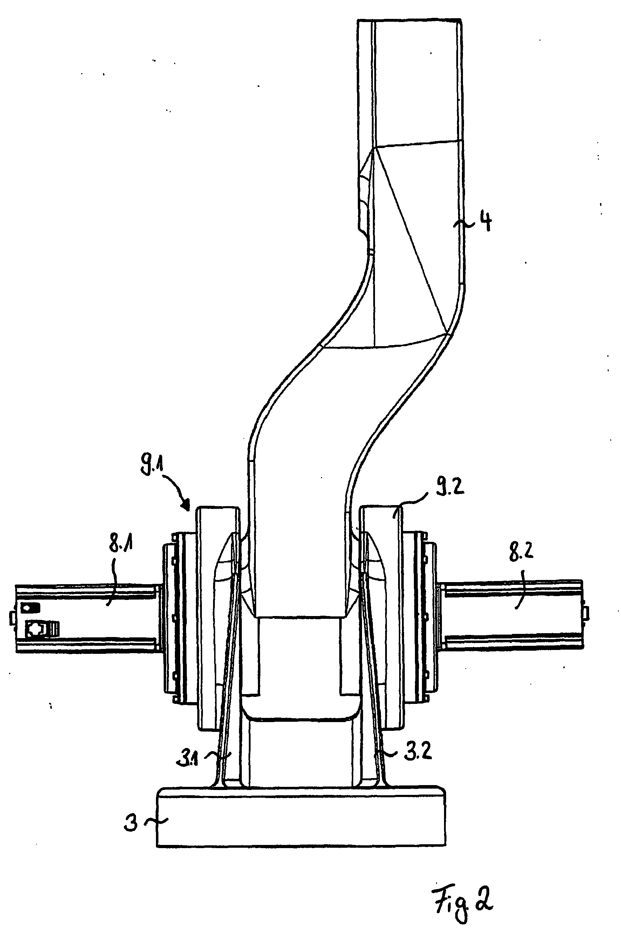

Die Fig. 2 zeigt Karussell 3 und Schwinge 4. Am Karussell 3 sind zwei Streben 3.1, 3.2 vorgesehen, zwischen denen die Schwinge 4 gehalten ist und an denen erfindungsgemäß jeweils außenseitig, auf der der Schwinge abgewandten Seite ein erster Motor 8.1 und ein zweiter Motor 8.2 jeweils mit einem Getriebe 9.1, 9.2 vorgesehen sind. Derart sind die Antriebselemente für die Schwinge doppelt und damit redundant ausgebildet.

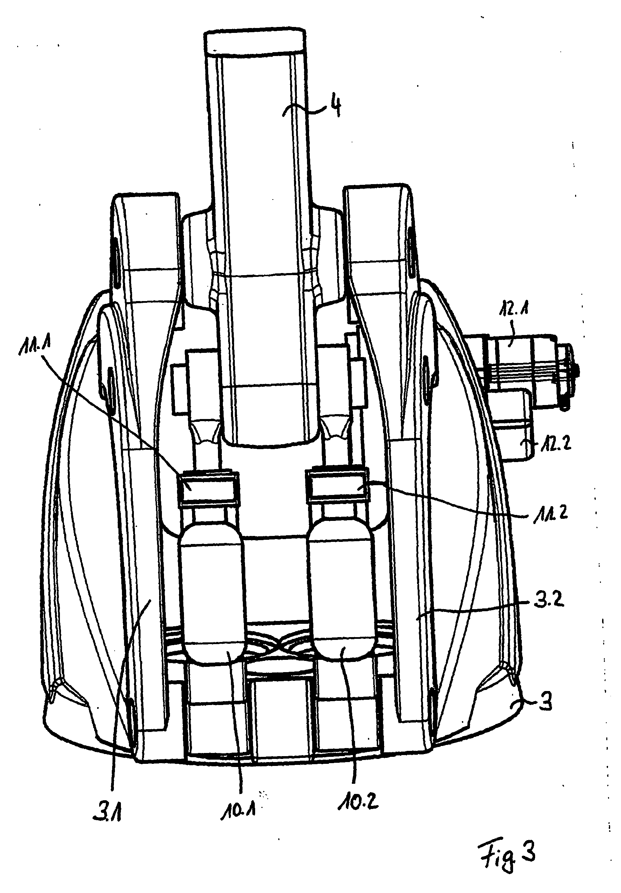

Die Fig. 3 zeigt eine entsprechende redundante Auslegung für Gewichtsausgleichsysteme sowie das Bremssystem für die Schwinge 4. Das Gewichtsausgleichsystem besteht aus zwei Federn 10.1, 10.2, wie hydropneumatischen, hydraulischen oder pneumatischen Federn. Jede der Federn ist mit einem Überwachungssensor 11.1, 11.2 versehen. Seitlich rechts in der Fig. 3 sind darüber hinaus bei Bremsen 12.1, 12.2 vorgesehen, die beide auf die Schwinge 4 wirken und diese abbremsen können. Statt einer einseitigen Anordnung der Bremsen 12.1, 12.2 können diese auch symmetrisch beidseitig der Schwinge 4 angeordnet sein.

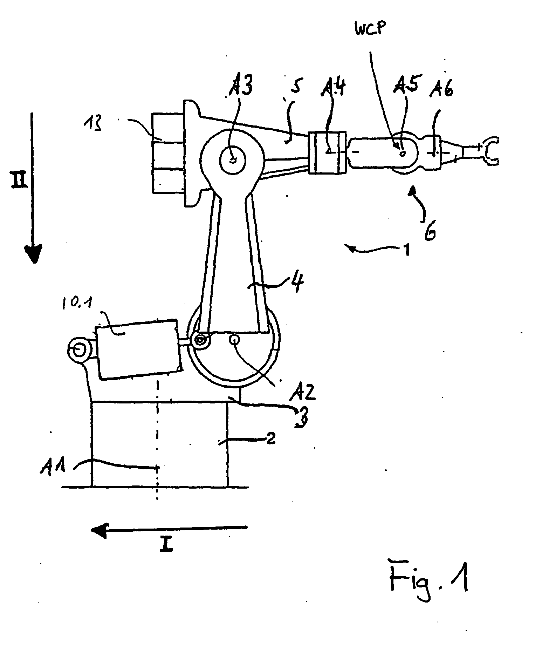

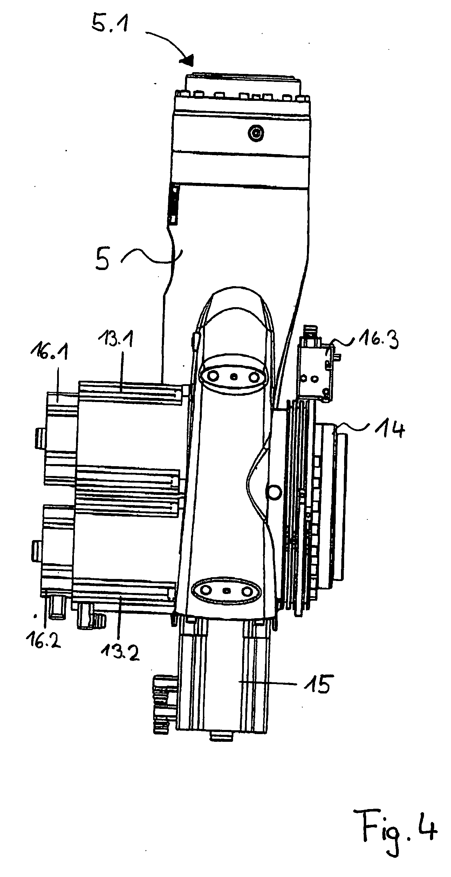

Die Fig. 4 zeigt einen Roboterarm 5 in Draufsicht. Links ist der doppelt ausgelegte Antriebsmotor 13.1, 13.2 für den Roboterarm dargestellt, während rechts das Getriebe 14 dargestellt ist, über welches er mit der Schwinge 3 (Fig. 1 bis 3) verbindbar ist. Am rückwärtigen (unteren) Ende des Roboters sind Motoren für die Handachsen des Roboters angeordnet, von denen lediglich der oberste Motor erkennbar ist und die über Gestänge auf die freien Enden 5.1 des Arms 5 anzuordnenden Handelemente einwirken.

Es sind zwei Wegaufnehmer 16.1, 16.2 dargestellt, die die Bewegungen des Roboterarms 5 relativ zur Schwinge antriebsseitig überwachen. Ein weiterer Wegaufnehmer 16.3 ist zur abtriebsseitigen Überwachung der Roboterarmbewegung vorgesehen, wodurch eine zusätzliche Redundanz bewirkt ist und auch der gesamte Antriebsstrang überwacht wird.

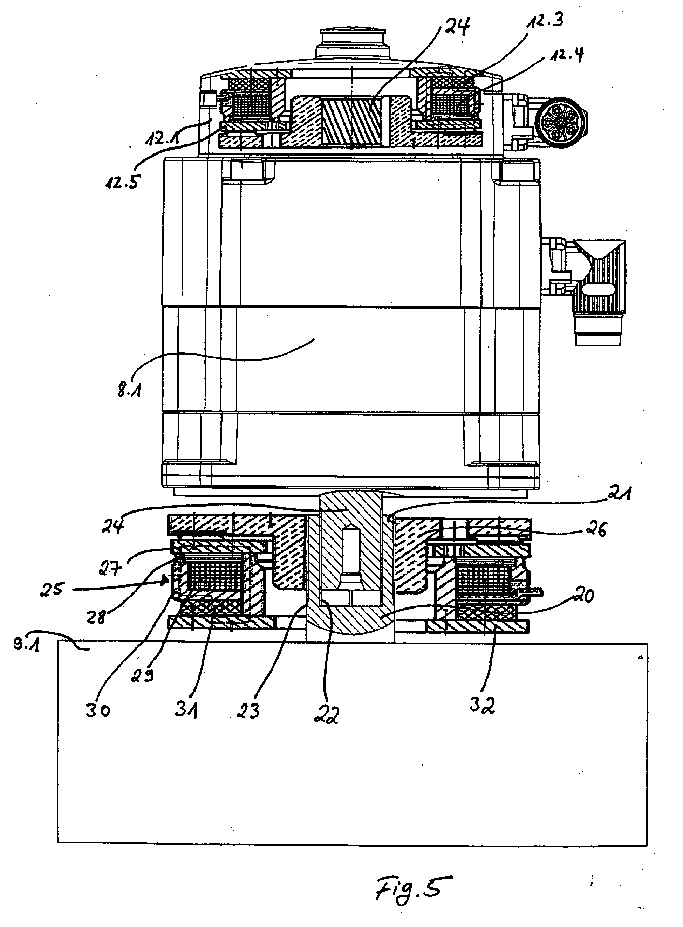

Die Fig. 5 zeigt den konstruktiven Aufbau einer erfindungsgemäßen redundanten Bremse am Beispiel einer Roboterachse. Aus dem Getriebe 9.1 ist eine Eingangswelle 20 herausgeführt. Die Eingangswelle 20 weist einen hohlzylindrischen Wellenstummel 21 auf. Dieser Wellenstummel 21 ist innen mit einer ersten formschlüssigen Wellenverbindung 22 und außen mit einer äußeren zweiten formschlüssigen Wellenverbindung 23 versehen. Die formschlüssigen Wellenverbindungen 22, 23 können beispielsweise als Evolentenprofil ausgeführt sein. In die innere erste formschlüssige Wellenverbindung 22 ist eine korrespondierende Antriebswelle 24 des Antriebsmotors 8.1 eingeschoben.

Der Antriebsmotor 8.1 verfügt über eine eingebaute Bremse 12.1. Die Bremse 12.1 wirkt auf die Antriebswelle 24 des Antriebsmotors 8.1.

Die Bremse 12.1 kann beispielsweise als Permanentmagnet-Einscheiben-Bremse ausgeführt sein. Bei solchen Bremsen wird die Kraftwirkung eines Permanentfeldes eines Permanentmagneten 12.3 zur Erzeugung des Bremsmoments genutzt. Zum Aufheben der Bremswirkung, d.h. zum Lüften der Bremse, wird das Feld des Permanentmagneten durch ein elektromagnetisches Feld einer Erregerwicklung 12.4 verdrängt. Ein sicheres, restmomentenfreies Lüften wird durch eine Feder gewährleistet, die im Einbauzustand auf den als umlaufende Bremsenhälfte ausgebildeten Anker 12.5 eine Rückzugskraft ausübt.

Eine redundante zweite Bremse 25 ist zwischen Motor 8.1 und Getriebe 9.1 angeordnet. Diese zweite Bremse 25 wirkt nicht auf die Antriebswelle 24 des Antriebsmotors 8.1, sondern - unmittelbar - auf die Eingangswelle 20 des Getriebes 9.1. Dazu ist eine Flanschnabe 26 der zweiten Bremse 25 über die äußere zweite formschlüssige Wellenverbindung 23 mit der Eingangswelle 20 verbunden. Eine Ankerscheibe 27 liegt auf der einen Seite eines Reibringes 28 an. Auf der gegenüberliegenden Seite des Reibringes 28 ist eine Erregerwicklung 29 zur Erzeugung eines elektromagnetischen Feldes angeordnet. Die Erregerwicklung 29 ist von einem Außenring 30 umgeben, an dessen Außenseite ein Permanentmagnet 31 angeordnet ist. Ein Flansch 32 kann mit dem Gehäuse des Getriebes 9.1 oder dem Roboterbauteil verbunden sein.

Da die erste Bremse 12.1 unmittelbar auf dem hinteren Ende der Antriebswelle 24 des Antriebsmotors 8.1 befestigt ist, könnte ein Bruch der Antriebswelle am vorderen Ende der Antriebswelle 24, oder ein Bruch der inneren ersten formschlüssigen Wellenverbindung 22 ein unerwünschtes Drehen der Eingangswelle 20 des Getriebes 9.1 verursachen. Zur Gewährleistung der Sicherheit ist deshalb die zweite Bremse 25 mit der Eingangswelle 20 des Getriebes 9.1 über die äußere zweite formschlüssige Wellenverbindung 23 verbunden.

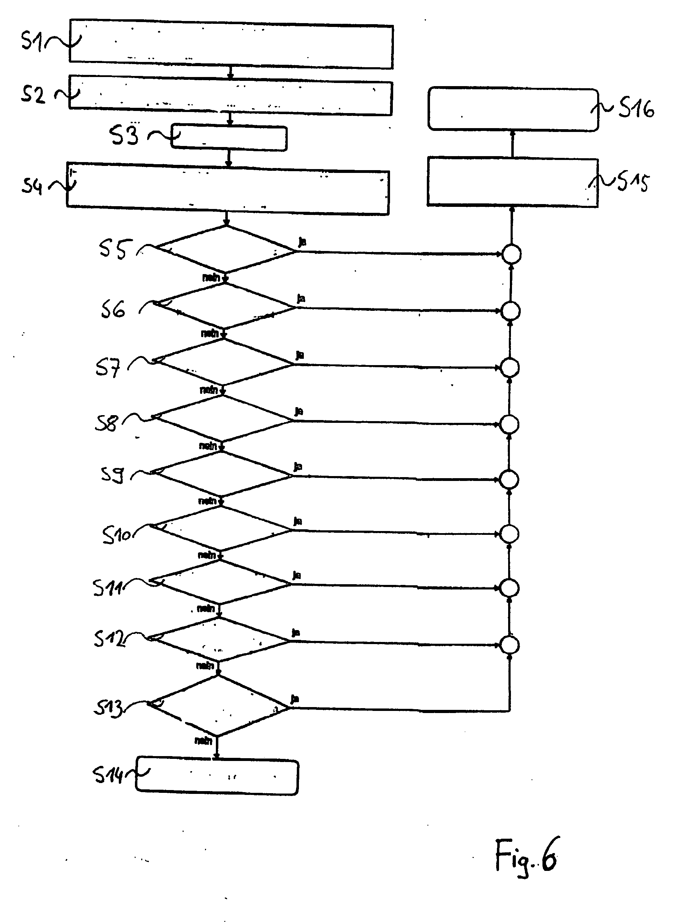

Die Fig. 6 zeigt ein Ablaufdiagramm eines erfindungsgemäßen Verfahrens zur Fehlerüberwachung und zur zusätzlichen Erhöhung der durch redundante Auslegung einzelner Funktionselemente und/oder Sensoren bewirkten Sicherheit. Vor der eigentlichen Inbetriebnahme des erfindungsgemäßen Roboters werden einfache Mechanikelemente, wie Strukturteile und Verschraubungen, durch Berechnungen mit ausreichend hohen Sicherheitsfaktoren in Schritt S1 auf Sicherheit überprüft. Zusätzlich erfolgt auch eine mechanische Prüfung. Weiterhin wird in Schritt S2 die Roboterbahn vor dem Einsatz desselben simuliert, beispielsweise im Rahmen einer Not-Stop-Simulation, in welcher sämtliche möglichen Ausfallsszenarien einzelner Funktionselemente und/oder Sensoren auch im Hinblick auf deren Zusammenwirken einbezogen werden. Durch eine derartige Simulation sind die benötigten Sicherheitsräume im Hinblick auf die Umgebung des Roboters während dessen Inbetriebnahme bekannt und können so im Anlagenlayout berücksichtigt werden.

In Schritt S3 kann nun das Robotersystem gestartet werden. Dabei erfolgt in zyklischen Abständen in einem jeweiligen Schritt S4 ein Funktionstest einzelner Funktionselemente und/oder Sensoren, wodurch insbesondere ein Ausfall von mehr als einer Komponente pro Durchlauf vermieden wird. Ein derartiger Funktionstest kann beispielsweise an den einzelnen Bremsen oder in Form einer Druckprüfung am Gewichtsausgleichssystem durchgeführt werden.

Insbesondere ist vorgesehen, einen Fehler in Form eines Justageverlusts der Roboterglieder oder Gelenke (Schritt S5) oder eines defekten Positionsgebers (Schritt S6) zu ermitteln, wobei die Fehlermeldung und Stillsetzung bei Ausgabe falscher oder unrealistischer Werte am Positionsgeber erfolgt.

Weiterhin kann ein Fehler in Form eines defekten Gewichtsausgleichssystems, welcher beispielsweise durch die redundant ausgebildeten Drucksensoren ermittelt werden kann (Schritt S7), in Form eines defekten Motors, wobei die Fehlererkennung durch Rückmeldung des Servomotors erfolgen kann (Schritt S8), oder in Form einer oder mehrerer defekter Bremsen (Schritt S9) oder eines oder mehrerer defekter Getriebe (Schritt S10) vorliegen, wobei in den letzten Fällen eine Verlängerung des Anhaltewegs bzw. eine Blockierung bei der weiteren Inbetriebnahme des Roboters festgestellt wird.

Weitere mögliche zu ermittelnde Fehlerquellen umfassen eine unterbrochene Stromzufuhr (Schritt S11), wobei auch hier eine Blockierung bei der weiteren Inbetriebnahme und ein Anhalten mittels Permanentmagnetbremsen erfolgt, oder ein sonstiger Defekt im Antriebsstrang (Schritt S12) mit einer damit einhergehenden Blockierung oder einer eventuellen Verlängerung des Anhaltewegs, oder einem Verlassen des Roboters der vorgesehenen Bahn (Schritt S13), was aus einer Abweichung zwischen den ermittelten Werten des/der Positionsgeber und der vorab simulierten Roboterbahn ermittelt werden kann.

Sind sämtliche der in den Schritten S5 bis S13 durchgeführten Fehlerabfragen negativ, kann ein sicherer Betrieb des Roboters vorausgesetzt und die Inbetriebnahme des Roboters in Schritt S14 fortgesetzt werden.

Wird jedoch während des Durchlaufens der Fehlerabfragen S5 bis S13 eine Fehlerquelle ermittelt, erfolgt in Schritt S15 ein sofortiger Stop des Roboters innerhalb der Sicherheitsräume, ohne die zulässige Beschleunigung zu überschreiten.

Somit kann in Schritt S16 ein sicheres Anhalten des Roboters bzw. die Verhinderung eines Systemstarts im Fehlerfall mit höchsten Sicherheitsanforderungen vorausgesetzt werden.

### Bezugszeichenliste

- 1: Gelenkroboter
- 2: Sockel
- 3: Karussell
- 3.1, 3.2: Streben
- 4: Schwinge
- 5: Roboterarm
- 5.1, 5.2: Enden
- 6: Hand
- 8.1, 8.2: Motor
- 9.1, 9,2: Getriebe
- 10.1, 10.2: Federn
- 11.1, 11.2: Überwachungssensor
- 12.1, 12.2: Bremsen
- 12.3: Permanentmagnet
- 12.4: Erregerwicklung
- 12.5: Anker
- 13.1, 13.2: Antriebsmotor
- 14: Getriebe
- 16.1, 16.2, 16.3: Wegaufnehmer
- 20: Eingangswelle
- 21: Wellenstummel
- 22, 23: Wellenverbindung
- 24: Antriebswelle
- 25: Bremse
- 26: Flanschnabe
- 27: Ankerscheibe
- 28: Reibring
- 29: Erregerwicklung
- 30: Außenring
- 31: Permanentmagnet
- 32: Flansch
- S1-S16: Verfahrensschritte

## Patentansprüche

1. Gelenkroboter mit durch Gelenke verbundenen Robotergliedern und mit an den Gelenken einwirkenden Funktionselementen (8.1, 8.2, 9.1, 9.2, 12.1, 12.2), **dadurch gekennzeichnet, dass** zumindest Haltebremsen (12.1, 12.2) als Funktionselemente redundant ausgelegt sind, indem neben einer auf eine Antriebswelle (24) eines Antriebsmotors (8.1) wirkenden Bremse (12.1) eine unmittelbar auf eine mit der Antriebswelle (24) verbundenen Eingangswelle (20) eines durch den Motor angetriebenen Getriebes (9.1) wirkende Bremse (25) vorgesehen ist und, wobei die Haltebremsen (12.1., 12.2.) als Funktionselemente zur Sicherheit des Roboters überwacht sind.

2. Roboter nach Anspruch 1 **dadurch gekennzeichnet, dass** ein Gewichtsausgleichsystem (10.1, 10.2) als Funktionselement redundant ausgebildet ist.

3. Roboter nach Anspruch 2, **dadurch gekennzeichnet, dass** das Gewichtsausgleichsystem (10.1, 10.2) zwei oder mehr parallel angeordnete Federn, wie hydraulische, pneumatische oder mechanische Federsysteme aufweist.

4. Roboter nach einem der Ansprüche 1 bis 3, **dadurch gekennzeichnet, dass** wenigstens ein Sensor (11.1, 11.2, 16.1, 16.2, 16.3) zur Überwachung eines oder mehrerer Funktionselemente (8.1, 8.2, 9.1, 9.2, 10.1, 10.2, 12.1, 12.2, 13.1, 13.2) vorgesehen ist.

5. Roboter nach Anspruch 4, **dadurch gekennzeichnet, dass** der/die Sensor(en) (11.1, 11.2, 16.1, 16.2, 16.3) redundant ausgelegt ist/sind.

6. Roboter nach Anspruch 4 oder 5, **dadurch gekennzeichnet, dass** abtriebsseitig der/die Sensor(en) (16.3) in Form von Absolutgebern zur Positionsbestimmung angeordnet sind.

7. Roboter nach einem der Ansprüche 1 bis 6, **gekennzeichnet durch** die Funktionselemente in Form der Haltebremsen (12.1, 12.2) zum sicheren Anhalten und Stoppen des Roboters auch bei Stromausfall.

8. Roboter nach einem der Ansprüche 4 bis 7, **gekennzeichnet durch** eine Einrichtung zum Vergleichen der über den/die Sensor(en) bestimmten Positionswerte mit den Positionswerten einer vorab berechneten Bahnkurve der Roboterglieder.

9. Roboter nach einem der Ansprüche 1 bis 8, **gekennzeichnet durch** einen vorab berechneten Sicherheitsraum, innerhalb dessen ein sicheres Anhalten der Roboterglieder möglich ist.

10. Roboter nach einem der Ansprüche 1 bis 9, **dadurch gekennzeichnet, dass** durch Gelenke verbundene Roboterglieder in Form einer offenen kinematischen Kette angeordnet sind.

11. Roboter nach einem der Ansprüche 1 bis 9, **dadurch gekennzeichnet, dass** zumindest einige der durch Gelenke verbundenen Roboterglieder in Form einer geschlossenen kinematischen Kette angeordnet sind.

## Claims

1. Articulated arm robot with robot members connected by means of joints and with functional elements (8.1, 8.2, 9.1, 9.2, 12.1, 12.2) acting on the joints, **characterized in that** at least blocking brakes (12.1, 12.2) as said functional elements have a redundant design, providing next to a brake (12.1) acting on a drive shaft (24) of a drive motor (8.1), a directly acting brake (25) acting on an input shaft (20) at a gear (9.1) powered by said motor connected to said drive shaft (24), wherein said blocking brakes (12.1, 12.2) as functional elements for security of said robot are securely monitored.

2. Robot in accordance with claim 1, **characterized in that** a weight balance system (10.1, 10.2) as a functional element has a redundant design.

3. Robot in accordance with claim 2, **characterized in that** the said weight balance system (10.1, 10.2) has two or more springs, such as hydraulic, pneumatic or mechanical spring systems, which are arranged in parallel.

4. Robot in accordance with one of the claims 1 through 3, **characterized in that** at least one said sensor (11.1, 11.2, 16.1, 16.2, 16.3) is provided for the monitoring of one or more said functional elements (8.1, 8.2, 9.1, 9.2, 10.1, 10.2, 12.1, 12.2, 13.1, 13.2).

5. Robot in accordance with claim 4, **characterized in that** the said sensor/sensors /11.1, 11.2, 16.1, 16.2, 16.3) has/have a redundant design.

6. Robot in accordance with claim 4 or 5, **characterized in that** at the output end, the said sensor/sensors (16.3) is/are arranged in the form of absolute transducers for determining the position.

7. Robot in accordance with one of the claims 1 through 6, **characterized by** functional elements in the form of said blocking brakes (12.1, 12.2) for the reliable stopping of the robot even in case of a power outage.

8. Robot in accordance with one of the claims 4 through 7, **characterized by** a means for comparing the position values determined by the sensor(s) to the position values of a path curve of the robot members calculated beforehand.

9. Robot in accordance with one of the claims 1 through 8, **characterized by** a precalculated safety space, within which a reliable stopping of the robot members is possible.

10. Robot in accordance with one of the claims 1 through 9, **characterized in that** robot members connected by means of joints are arranged in the form of an open kinematic chain.

11. Robot in accordance with one of the claims 1 through 9, **characterized in that** at least some of the robot members connected by means of joints are arranged in the form of a closed kinematic chain.

## Revendications

1. Robot articulé avec des membres de robot reliés par des articulations et avec des éléments fonctionnels (8.1, 8.2, 9.1, 9.2, 12.1, 12.2) agissant au niveau des articulations, **caractérisé en ce qu'**au moins des freins d'arrêt (12.1, 12.2) sont prévus de façon redondante comme éléments fonctionnels, un frein (25) agissant directement sur un arbre d'entrée (20) relié à l'arbre d'entraînement (24) d'un engrenage (9.1) entraîné par le moteur étant prévu en plus d'un frein (12.1) agissant sur un arbre d'entraînement (24) d'un moteur d'entraînement (8.1, les freins d'arrêt (12.1, 12.2) comme éléments fonctionnels pour la sécurité du robot étant surveillés de façon sécurisée.

2. Robot selon la revendication 1, **caractérisé en ce qu'**un système d'équilibrage du poids (10.1, 10.2) est réalisé de façon redondante sous la forme d'un élément fonctionnel.

3. Robot selon la revendication 2, **caractérisé en ce que** le système d'équilibrage du poids (10.1, 10.2) comporte deux ressorts ou plus disposés en parallèle, tels que des systèmes de ressort hydraulique, pneumatique ou mécanique.

4. Robot selon l'une quelconque des revendications 1 à 3, **caractérisé en ce qu'**au moins un capteur (11.1, 11.2, 16.1, 16.2, 16.3) est prévu pour surveiller un ou plusieurs éléments fonctionnels (8.1, 8.2, 9. 1, 9.2, 10.1, 10.2, 12, 1, 12.2, 13.1, 13.2).

5. Robot selon la revendication 4, **caractérisé en ce que** le(s) capteur(s) (11.1, 11.2, 16.1, 16.2, 16.3) est/sont réalisé(s) de façon redondante.

6. Robot selon la revendication 4 ou 5, **caractérisé en ce que** côté entraînement de sortie, le(s) capteur(s) (16.3) est/sont disposé(s) sous la forme de capteurs absolus de détermination de position.

7. Robot selon l'une quelconque des revendications 1 à 6, **caractérisé par** les éléments fonctionnels prenant la forme de freins d'arrêt (12.1, 12.2) permettant d'arrêter et de stopper de façon sûre le robot et ce également en cas de coupure de courant.

8. Robot selon l'une quelconque des revendications 4 à 7, **caractérisé par** un dispositif de comparaison entre les valeurs de position déterminées au moyen du/des capteur(s) et les valeurs de position d'une trajectoire préalablement calculée des membres de robot.

9. Robot selon l'une quelconque des revendications 1 à 8, **caractérisé par** une plage de sécurité calculée au préalable à l'intérieur de laquelle un arrêt sûr des membres de robot est possible.

10. Robot selon l'une quelconque des revendications 1 à 9, **caractérisé en ce que** les membres de robot reliés par des articulations sont réalisés sous la forme d'une chaîne cinématique ouverte.

11. Robot selon l'une quelconque des revendications 1 à 9, **caractérisé en ce qu'**au moins quelques-uns des membres de robot reliés par les articulations sont réalisés sous la forme d'une chaîne cinématique fermée.
